Europäisches Patentamt

European Patent Office

Office européen des brevets

(19)

(11) Publication number: **0 487 894 A1**

## EUROPEAN PATENT APPLICATION

(21) Application number: **91117870.5**

(22) Date of filing: **19.10.91**

(51) Int. Cl.⁵: **A01G  27/00**

(30) Priority: **30.11.90 IT 6046590 U**

(43) Date of publication of application:
**03.06.92 Bulletin  92/23**

(84) Designated Contracting States:
**AT BE CH DE DK ES FR GB GR IT LI LU NL SE**

(71) Applicant: **Buora, Bruno**
**Via G. Leopardi, 2**
**I-33085 Maniago (PN)(IT)**

(72) Inventor: **Buora, Bruno**
**Via G. Leopardi, 2**
**I-33085 Maniago (PN)(IT)**

(74) Representative: **Petraz, Gilberto Luigi**
**GLP S.r.l. Piazzale Cavedalis 6/2**
**I-33100 Udine(IT)**

(54) **Device to cultivate plants in flower pots and the like.**

(57)  Device to cultivate plants in flower pots and the like, which can be fitted to flower pots, flower boxes or other items suitable for the cultivation of plants, the flower pots, flower boxes, etc. being already existing or of new construction, the device being suitable to feed automatically with a wetting liquid the material to be cultivated positioned on the device, the device consisting of a box-type container (10-110-210) which is placed upside-down on the bottom of the flower pot (11) with which it is combined so as to create a reservoir for the wetting liquid, the container (10-110-210) being provided with means (18-118), or being conformed to create means (218-318-418), which are suitable to draw the wetting liquid automatically, the container (10-110-210) being provided also with means (17) for the outward passage of the liquid.

fig.1

This invention concerns a device to cultivate plants in flower pots and the like as set forth in the main claim.

To be more exact, the invention concerns a device suitable to feed and wet materials to be cultivated, the device being capable of ensuring a high degree of independent operation and of being fitted to any cultivation container, even of an existing type.

The state of the art includes manifold devices or systems for cultivation in flower pots or the like, such devices or systems being also the subjects of patent applications in the name of the present applicant.

All the solutions of the state of the art have the purpose of ensuring a high degree of independent working from the point of view of maintenance of the cultivation.

In other words there is a tendency to have a means of a great capacity such as a tank to hold the wetting liquid and means able to draw automatically and to transfer continuously and evenly the wetting liquid to the material being cultivated, which is generally positioned above the tank.

The solutions of the state of the art overcome this problems fully and can also be readily fitted to existing flower pots, flower boxes, containers, etc. but entail structural complexity.

The market requires a solution which is as simple as possible from a constructional point of view and therefore cheap and at the same time is extremely functional also from the point of view of being capable of being fitted to new or existing usage systems.

The present applicant has accomplished the above purposes with a device of the type set forth in the main claim, while the dependent claims describe various features of the invention.

The device to cultivate plants in pots or the like according to the invention consists of a simple box-shaped container made of a suitable material and positioned upside down on the bottom of the flower pot or flower box in which the cultivation is to take place.

The container is placed substantially in contact with the sidewalls of the flower pot and forms a tank for the wetting liquid.

The container comprises, in its sidewalls, passages for the wetting liquid to emerge, whereas it comprises in its bottom, which in fact forms an upper supporting surface for the material to be cultivated, means to top up the wetting liquid.

The container, which may have any shape or size to suit its method of use, includes in its periphery some uneven portions or recesses, which have a vertical extent equal to the height of the container and form spaces that are filled by the material to be cultivated when the device is set to work.

In this way there are provided between the outer sidewalls of the container and the inner sidewalls of the flower pot some columns of the material which draw and receive automatically the wetting liquid from the passages in the sidewalls of the container and convey that liquid continuously to the mass of material on the top of the container-tank.

The container may have a shape such that, when it is combined with its respective flower pot, it creates automatically the spaces suitable for the drawing of the liquid.

Moreover, the container may be conformed so as to be combined with other containers within one flower pot or box so as to create with those other containers and with the sidewalls of the flower pot the required spaces to draw the liquid.

In this way a device which is fully functional and quick to apply is created with a simple box-type container and without further additional means to draw the liquid and without other elements.

The attached figures, which are given as a non-restrictive example, show the following:

Fig.1     is a three-dimensional view of a preferred embodiment of the invention at work;

Fig.2     is a plan view of another embodiment of the invention;

Fig.3     is a plan view of yet another embodiment of the invention;

Fig.4     is a plan view of a multiple application of the invention.

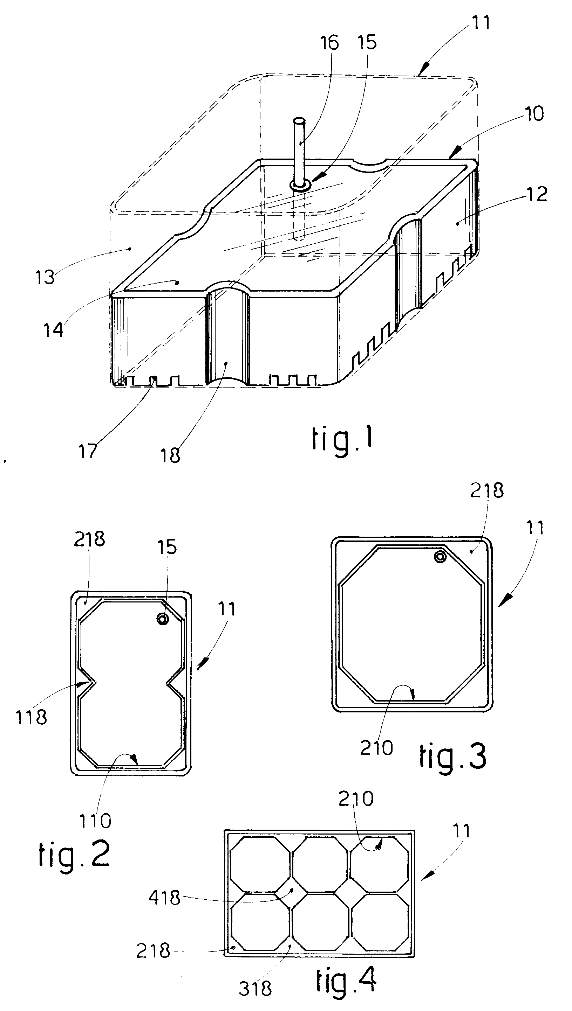

With reference to Fig.1 a device to cultivate plants in flower pots and the like according to the invention consists of a box-type container 10 which is placed upside down on the bottom of a flower pot or flower box 11.

In this example the container 10 and flower pot 11 have a square or rectangular section and the container 10 is positioned with its sidewalls 12 substantially in contact with the inner side of sidewalls 13 of the flower pot 11.

The container 10 encloses between its sidewalls 12 and its top or bottom 14 (depending on how it is considered, but its top when in its working position) an empty space which forms a tank to hold liquid for wetting the plants being cultivated.

The material to be cultivated is spread loose on the top 14.

The top 14 contains a hole 15 for a tube 16 suitable to top up the wetting liquid within the container 10.

The container 10 comprises in the lower portion of its sidewalls 12 a series of openings 17 of a desired number and size to enable the liquid to leave the tank in the direction of the space between the sidewalls 12 of the container 10 and the sidewalls 13 of the flower pot 11.

The sidewalls 12 of the container 10 include some spaces or recesses or grooves 18 within which the material to be cultivated becomes deposited.

Vertical columns of the material become formed in the spaces 18 between the sidewalls 12 of the container 10 and the sidewalls 13 of the flower pot 11 and draw automatically and convey the liquid leaving the openings 17 towards the material deposited on the top 14 of the container 10.

These spaces 18 may be positioned as desired and may have various shapes and sizes and be in a desired number.

Fig.2 shows a plan view of an example of the embodiment wherein the container 110 includes six spaces 18, of which the two intermediate spaces 118 have a triangular section, whereas four spaces 218 have a triangular section but are provided by a specific combination of the shapes of the corner zones of the container 110 and of the flower pot 11.

Fig.3 shows a plan view of another form of embodiment of a container 210 whereby it is the shape itself of the container 210 that creates the desired spaces 218 at the corners of the flower pot 11.

Lastly, Fig.4 also shows a plan view of an embodiment whereby a plurality of containers 210 are fitted in one and the same flower pot or flower box 11 and may have the same or different shapes and sizes and create the required spaces 218-318-418 in conjunction with each other and with the inner surfaces of the sidewalls of the flower pot 11.

We have described here some embodiments of the invention, but it is clear that a person skilled in this field can provide many variants without departing thereby from the scope of the invention as claimed hereafter.

**Claims**

1. Device to cultivate plants in flower pots and the like, which can be fitted to flower pots, flower boxes or other items suitable for the cultivation of plants, the flower pots, flower boxes, etc. being already existing or of new construction, the device being suitable to feed automatically with a wetting liquid the material to be cultivated positioned on the device, the device being characterized in that it consists of a box-type container (10-110-210) which is placed upside-down on the bottom of the flower pot (11) with which it is combined so as to create a reservoir for the wetting liquid, the container (10-110-210) being provided with means (18-118), or being conformed to create means (218-318-418), which are suitable to draw the wetting liquid automatically, the container (10-110-210) being provided also with means (17) for the outward passage of the liquid.

2. Device as claimed in Claim 1, whereby the means to draw the wetting liquid automatically are spaces (18-118) provided in sidewalls (12) of the container (10-110).

3. Device as claimed in Claim 1, whereby the means to draw the wetting liquid automatically are spaces (218) provided by the shape of the container (210) in combination with the flower pot or flower box (11).

4. Device as claimed in Claim 1, whereby the means to draw the wetting liquid automatically are spaces (318) provided in combination with analogous containers (210) and with the flower pot or flower box (11).

5. Device as claimed in Claim 1, whereby the means to draw the wetting liquid automatically are spaces (418) provided by the reciprocal combination of analogous containers (210).

6. Device as claimed in any claim hereinbefore, whereby the means (17) for the outward passage of the liquid are windows, slits, openings, hollows or the like provided in the sidewalls (12) of the containers (10-110-210).

7. Device as claimed in any claim hereinbefore, whereby the containers comprise in their top, or bottom, (14) means (15-16) to top up the wetting liquid.

fig.1

fig.2

fig.3

fig.4

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| X | DE-A-3 226 719 (LENZ)<br>* page 7, line 25 - page 9, line 28; figures 1-2 * | 1,3,6-7 | A01G27/00 |
| Y | | 2,4 | |
| Y | EP-A-0 183 653 (MAILLEFER)<br>* page 2, last paragraph - page 4, last paragraph; figures 6-7 * | 2,4 | |
| X | FR-A-2 212 089 (ETERNIT INDUSTRIES)<br>* page 3, line 7 - line 34 *<br>* page 4, line 28 - page 5, line 1; figures 4-6 * | 1,6-7 | |
| A | FR-A-2 646 750 (STROPPA)<br>* page 1, line 17 - page 2, line 24; figures 1,7-11 * | 5 | |
| | | | TECHNICAL FIELDS SEARCHED (Int. Cl.5 )<br><br>A01G |

The present search report has been drawn up for all claims

| Place of search | Date of completion of the search | Examiner |
|---|---|---|
| THE HAGUE | 28 FEBRUARY 1992 | FONTS CAVESTANY A. |

EPO FORM 1503 03.82 (P0401)